## Europäisches Patentamt

## European Patent Office

## Office européen des brevets

Veröffentlichungsnummer: **0 287 016**

**A2**

# EUROPÄISCHE PATENTANMELDUNG

Anmeldenummer: 88105740.0

Int. Cl.⁴ **G02B 6/04**

Anmeldetag: 11.04.88

Priorität: 14.04.87 DE 3712660

Veröffentlichungstag der Anmeldung:
19.10.88 Patentblatt 88/42

Benannte Vertragsstaaten:
AT BE CH DE FR GB IT LI NL SE

Anmelder: **Siemens Aktiengesellschaft Berlin
und München**
**Wittelsbacherplatz 2**
**D-8000 München 2(DE)**

Erfinder: **Mayr, Ernst**
**Wernbergstrasse 5**
**D-8130 Starnberg(DE)**
Erfinder: **Oestreich, Ulrich, Dipl.-Ing.**
**Karl-Witthalm-Strasse 15**
**D-8000 München 70(DE)**
Erfinder: **Weil, Erich, Dr.**
**Damaschkestrasse 90**
**D-8000 München 82(DE)**

Lichtwellenleiter mit drei Schutzschichten aus Kunststoffmaterial und Verfahren zu deren Herstellung.

Die Lichtleitfaser (LF) weist eine mehrlagige Beschichtung auf, wobei die Innenschicht (CT1) aus aufgerecktem Material besteht.

FIG 2

EP 0 287 016 A2

## Lichtwellenleiter mit drei Schutzschichten aus Kunststoffmaterial und Verfahren zu deren Herstellung

Die Erfindung betrifft einen Lichtwellenleiter mit drei auf einer Lichtleitfaser aufgebrachten Schichten aus Kunststoffmaterial.

Aus der DE-PS 30 02 363 sind Lichtleitfasern bekannt, bei denen drei Schichten aufgebracht sind. Die innerste Schicht (primärer Überzug) besteht aus einem Harzüberzug, welcher unmittelbar nach dem Ziehen der Lichtleitfaser dadurch aufgebracht wird, daß die blanke Faser durch eine Küvette mit der flüssigen Harzmischung hindurchgezogen wird. Die Stärke dieser primären Schicht liegt etwa zwischen 10 und 30 μm. Eine nachfolgende Pufferschicht kann aus Silikonharz, gummiähnlichem Material oder dergleichen bestehen, wobei Wandstärken zwischen 50 und 200 μm verwendet werden. Außen ist als dritte Schicht ein sekundärer Überzug vorgesehen, welcher aus relativ hartem Material besteht und im Schmelzextrusionsverfahren aufgebracht wird. Die vorgesehenen Außendurchmesser der so beschichteten Lichtwellenleiter liegen in der Größenordnung von 900 μm. Es handelt sich also um eine festumhüllte Faser, für die dieser Außendurchmesser typisch ist.

Für das Aufbringen der innersten Schicht (primäre Beschichtung) sind Einrichtungen notwendig, die sehr gut zentriert werden müssen. Andererseits ist die Lichtleitfaser hier noch völlig ungeschützt, so daß Führungseinrichtungen oder dergleichen nur mit Schwierigkeiten einsetzbar sind. Außerdem ist diese Methode stark abhängig von der Güte der Zentrierung und bei nicht ausreichender Zentrierung (vor allem geringer Wandstärke) kann es leicht zu einer Beschädigung oder Beeinträchtigung der Lichtleitfaser kommen. Weiterhin spielt die Viskosität der für die erste Beschichtung verwendeten Harzmasse eine besondere Rolle, was dazu führt, daß die Küvetten entsprechend beheizt werden müssen. Auch ist bei den bekannten Beschichtungen mittels Harzmasse und Küvette der angelegte Druck von großem Einfluß, um dadurch den Einziehkegel in unmittelbarer Fasernähe zu verkürzen. Wird dieser Gesichtspunkt nicht beachtet kann es dazu führen, daß Gas vom Coating mit eingeschlossen wird. Ein weiterer Nachteil der bekannten Anordnung besteht darin, daß bei einer Änderung der Ziehgeschwindigkeit alle vorstehend genannten Parameter der primären Beschichtung mit geändert werden müssen, was zu erheblichen Einstellungsschwierigkeiten führen kann.

Der Erfindung liegt die Aufgabe zugrunde, einen Weg aufzuzeigen, auf dem eine nach den Eigenschaften optimierte mehrfache Beschichtung der Lichtleitfasern erreicht werden kann und die Beschichtung fertigungstechnisch besonders günstig durchführbar ist. Gemäß der Erfindung wird dies bei einem Lichtwellenleiter der eingangs genannten Art dadurch erreicht, daß die auf die blanke Lichtleitfaser aufgebrachte Innenschicht aus in Längsrichtung aufgerecktem Material besteht.

Da bei der Erfindung die Innenschicht im Schlauchreckverfahren aufgebracht ist, sind besondere Zentriervorgänge nicht notwendig, weil der Reckkegel selbst die Zentrierung für die Lichtleitfaser darstellt. Die Berührung zwischen Lichtleitfaser einerseits und der Innenwandung des Reckkegels andererseits erfolgt erst im letzten Moment, also in einem Zustand, in welchem der Reckkegel bereits die endgültige Wandstärke erreicht hat. Im Endergebnis, d.h. nach Abschluß der primären Beschichtung, liegt die entsprechend aufgebrachte Innenschicht praktisch kräftefrei an der Lichtleitfaser an und es werden, über den Umfang verteilt, weitgehend gleichmäßige Wandstärken erreicht, so daß Beeinträchtigungen der Qualität der Lichtleitfaser durch unterschiedliche Wandstärken der Beschichtung nicht zu befürchten sind.

Die Innenschicht ist zweckmäßig sehr dünn (5 – 10 μm), hat einen Brechungsindex ≥ 1.5 bei allen infragekommenden Wellenlängen und Temperaturen und kann direkt nach dem Aufbringen durch Abkühlung erstarren oder durch Vernetzung verfestigt werden.

Die Erfindung betrifft weiterhin ein Verfahren zum Aufbringen von mehreren Schichten aus Kunststoffmaterial auf eine Lichtleitfaser, welches dadurch gekennzeichnet ist, daß die Innenschicht (primäre Beschichtung) aus einem thermoplastischen oder reaktiven Kunststoffmaterial im Schlauchreckverfahren aufgebracht wird.

Weiterbildungen der Erfindung sind in Unteransprüchen wiedergegeben.

Die Erfindung und ihre Weiterbildungen werden nachfolgend anhand von Zeichnungen näher erläutert. Es zeigen:

Fig. 1 im Querschnitt ein erstes Ausführungsbeispiel mit einer mit drei Schutzschichten versehenen Lichtleitfaser nach der Erfindung und

Fig. 2 eine Einrichtung zur Aufbringung von drei Schichten und zur Durchführung des erfindungsgemäßen Verfahrens in schematischer Darstellung.

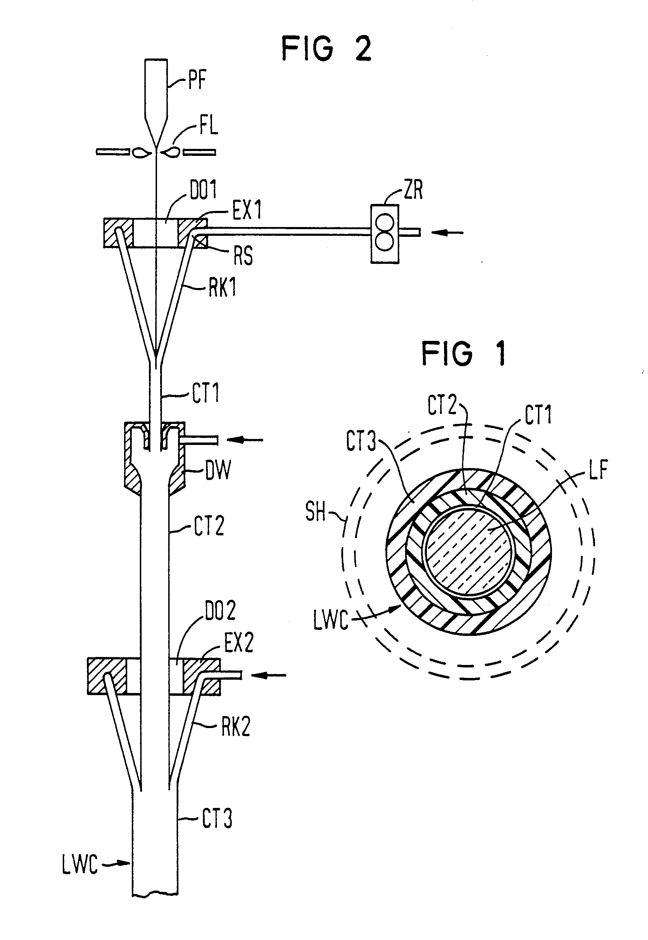

In Fig. 1 ist ein beschichteter Lichtwellenleiter LWC dargestellt, der einen Außendurchmesser in der Größenordnung von 250 μm aufweist. Die eigentliche, aus Kern- und Mantelglas bestehende Lichtleitfaser weist einen Außendurchmesser etwa in der Größenordnung von 125 μm auf. Sie ist mit einer ersten Schutzschicht (Innenschicht - primäre Beschichtung) CT1 versehen, deren Wandstärke zwischen 5 μm und 10 μm liegt. Diese Innen-

schicht CT1 wird im Schlauchreckverfahren aufgebracht. d.h. es wird durch einen Extruder oder eine Zahnradpumpe ZR mittels eines Extruderkopfes ein Reckkegel erzeugt. in dessen Zentrum die Lichtleitfaser LF einläuft und durch den Reckkegel ohne exakte Zentrierung beschichtet wird. Es ist zweckmäßig. diesen Durchlauf möglichst in vertikaler Richtung auszuführen. Als Material für die thermoplastische Innenschicht CT1 wird bevorzugt Polyisobuthylene verwendet (z.B. ein unter dem Handelsnamen "OPPANOL B 10" der Fa. BASF bekannter Stoff). also ein langkettiger. bei Gebrauchstemperatur nicht einfrierender Thermoplast mit einem Brechungsindex n < 1.5 zur UV-Absorption. Infrage kommen statt dessen auch harte UV-reaktive Materialien (z.B. "UV-Cure 95 4044" der Fa. De Soto) in ebenso dünner Schicht als Abriebschutz und Lichtabsorber. Auch weitere Thermoplaste sind vorstellbar. Der Reckkegel wird beim Ausziehen in seiner Wandstärke stark verringert und bedarf nur einer groben Zentrierung. Für den zur Bildung des Reckkegels dienenden Extruderkopf kann ein relativ weites Werkzeug verwendet werden (in der Größenordnung des Ringspalt-Durchmessers von bevorzugt 2 mm bis 4 mm). so daß dessen Zentrierung unproblematisch ist. Die Bohrung der Eintrittsöffnung sollte zwischen 1 mm und 3 mm Durchmesser gewählt werden. Die für die Innenschicht verwendeten Materialien sollten einen Brechungsindex von über 1.5 haben. gut auf der Glasoberfläche der Lichtleitfaser LF haften. aber dennoch leicht entfernbar sein (entweder durch Erwärmung oder durch Ablösung mittels chemischer Lösungsmittel). Auch sollte das für die Innenschicht CT1 verwendete Material möglichst alterungsbeständig sein und zwar auch bei hohen Temperaturen. Eine etwaige geringe Dezentrierung ist wegen der verwendeten geringen Schichtdicke der Innenschicht CT1 relativ unproblematisch.

Die nachfolgende zweite Schicht oder Zwischenschicht CT2 weist wesentlich größere Wandstärken auf und zwar zweckmäßig zwischen 20 μm und 40 μm. Diese Zwischenschicht CT2 sollte polsternde Eigenschaften haben. also aus wesentlich weicherem. ggf. vernetzbarem Material bestehen als z.B. die Innenschicht CT1. Besonders geeignet sind hierfür Silikon-Akrylate oder besonders weich eingestellte UV-Akrylate sowie fein verzeilte gummiartige Materialien aus aliphatischen Thermoplasten. PU. Polyester oder aus vernetzbarem Material.

Die Zwischenschicht CT2 wird im Schlauchreck-oder Druckbeschichtungsverfahren aufgebracht. Das Druckwerkzeug muß im letzteren Fall zwar zentriert werden. kann aber aufklappbar gestaltet sein. Eine leichte Dezentrierung und ein Fugenversatz der Küvette. sowie etwaige durch Oberflächenspannung erzeugte Tröpfchenbildungen sind wegen der deckenden Innenschicht und der im gleichen Arbeitsgang hergestellten harten Außenschicht weniger kritisch. das gleiche gilt für die schlauchgespritzte Schicht.

Die polsternde Schicht CT2 ist zweckmäßig etwa 3-bis 14-mal so dick wie die Innenschicht CT1.

Als Außenschicht CT3 wird ein harter Thermoplast oder auch ein hartes UV-Elastomer in wiederum relativ dünner Schicht als Verformungspanzer aufgebracht. In Frage kommen hier Polyätherimide (bekannt unter dem Handelsnamen "ULTEM" der Fa. General Electric. PA12 (d.h. ein Polyamid mit hohem aliphatischem Anteil) und ähnliche harte. bevorzugt jedoch temperaturbeständige Stoffe. Auch diverse Polyester sind hierfür einsetzbar. Die Materialien für die Außenschicht CT3 sollten temperaturbeständig sein. die Lichtleitfaser LF gegen Deformationen schützen. sie jedoch bei Temperaturwechseln nicht selbst in gefährlicher Weise zu deformieren vermögen. d.h. möglichst dünn sein. Die äußere Schicht CT3 wird wiederum im Schlauchreckverfahren mit Hilfe eines Extruders aufgebracht.

Wenn das Material der Außenschicht CT3 zumindest eine gewisse Transparenz aufweist. so kann die endgültige Vernetzung der Zwischenschicht CT2 von außen auch durch UV-Licht herbeigeführt werden, und zwar nach dem vollständigen Beschichtungsprozeß. d.h. nach Aufbringen der Außenschicht CT3. Dabei wird die endgültige Formgebung durch die harte Außen-und Deckschicht CT3 erzwungen. die ja bereits unmittelbar nach dem Extrusionsprozeß ausgehärtet ist. Damit sind die sonst gerade bei Aufbringung dicker Schichten (Polsterschichten) CT2 anfallenden Probleme weitgehend beseitigt. Partielle UV-Absorption durch die harte Außenschicht CT3 kann durch eine entsprechende Erhöhung der Bestrahlungsdichte ausgeglichen werden. Die notwendige Zentrierung ist. wie bereits erwähnt. bei den schlauchgereckten Beschichtungen CT1 und CT3 wegen der verwendbaren weiten Spritzwerkzeuge (d.h. mit großem Ringspalt) weitgehend unkritisch.

Die Wandstärke der Außenschicht sollte zwischen 20 μm und 40 μm gewählt werden. also etwa das 2-bis 4-fache der primären Schicht CT1.

Die E-Module für die einzelnen Schichten werden zweckmäßig folgendermaßen gewählt:

Innenschicht CT1:    E-Modul zwischen 100 und 1000 N/mm²

Zwischenschicht CT2:    E-Modul zwischen 0.01 und 1N/mm²

Außenschicht CT3:    E-Modul zwischen 1000N/mm² und 3000 N/mm².

Die für die Materialien der Schichten CT1 bis CT3 verwendeten Stoffe können auch für Dauertemperaturen über 100°C hinreichend beständig sein, jedoch kaum über 120°C. Sie sollten jedoch bis 40° C keinen ausgeprägten Umwandlungspunkt durchlaufen, wie z.B. Polyimidlache und Silikonakrylate.

Der Außendurchmesser des dreifach beschichteten Lichtwellenleiters LWC liegt zweckmäßig zwischen 200 μm und 500 μm. Er entspricht damit dem eines üblichen (einfach oder zweifach) beschichteten Lichtwellenleiters und kann somit z.B. lose in eine gefüllte oder ungefüllte Schutzhülle SH eingebracht werden und so zum Aufbau einer Lichtleitader mit einem Außendurchmesser in der Größenordnung von 1 mm bis 6 mm dienen.

Bei der Fertigungseinrichtung nach Fig. 2 ist eine Vorform mit PF bezeichnet. Mittels einer Erhitzung (z.B. durch die Flamme FL) wird daraus in bekannter Weise die aus Kern-und Mantelmaterial bestehende Lichtleitfaser LF gezogen. Sie durchläuft einen Extruderkopf EX1, dessen Durchtrittsöffnung DO1 entsprechend groß gestaltet ist, beispielsweise in der Größenordnung von 1 mm bis 3 mm. Aus dem Extruderkopf EX1 wird ein Reckkegel RK1 gezogen (Ringspaltdurchmesser RS in der Größenordnung von 2 mm bis 4 mm), der sich in seiner Wandstärke in Durchlaufrichtung zunehmend verringert und schließlich fest an der Lichtleitfaser LF anliegt und so die aufgerechte dünne Innenschicht CT1 bildet. Der Reckkegel RK1 bewirkt dabei ohne weiteres Zutun die Zentrierung der Lichtleitfaser innerhalb eines gewissen Exzentrizitätsbereiches. Eine besonders einfache Zentrierung wird erreicht, wenn alle nachfolgenden Prozesse möglichst in vertikaler Richtung verlaufen.

Die Anwendung eines Reckkegels hat gegenüber einer Druckbeschichtung den Vorteil, daß mittels einer volumetrisch dosierenden Pumpe wie einer Zahnradpumpe ZR die Förderung des Materials CT1 vorgegeben werden kann. Damit ist die Viskositätsabhängigkeit weitgehend beseitigt und eine geschwindigkeitsproportionale Förderung gewährleistet. Das Material für die Innenschicht CT1 kann thermoplastisch oder UV-reaktiv sein (in diesem Fall kann vor der zweiten Beschichtung eine Härtungsstrecke mit UV-Licht eingefügt werden) und sollte einen kleinen Anteil sehr langkettiger Moleküle haben, z.B. in einer Verteilung von 5000 bis 100000 mit einem Höchstanteil von 20 %.

Anschließend ist ein Druckwerkzeug DW vorgesehen, durch das die Zwischenschicht CT2 aufgebracht wird. Hierbei tritt kein Reckkegel auf sondern die Beschichtung erfolgt als Druckbeschichtung. Alternativ kann die Zwischenschicht CT2 auch im Schlauchreckverfahren, wie bei CT1 beschrieben, aufgebracht werden.

Die mit der Zwischenschicht CT2 versehene Lichtleitfaser läuft durch eine weiteren Extruderkopf EX2 hindurch, dessen Durchtrittsöffnung DO2 in der Größenordnung zwischen 3 mm und 10 mm liegt. Auch hier wird ein Reckkegel RK2 gebildet, der sich fest an die Zwischenschicht (Polsterschicht) CT2 anlegt und so die Außenschicht CT3 bildet. Bezüglich der Zentrierung gilt das im Zusammenhang mit dem Extruderkopf EX1 Gesagte sinngemäß.

Druck-oder Schlauchwerkzeuge können aufklappbar gemacht werden, wenn die wirksamen Drücke niedrig gehalten werden können.

## Ansprüche

1. Lichtwellenleiter (LWC) mit mehreren auf einer Lichtleitfaser (LF) aufgebrachten Schichten aus Kunststoffmaterial,
**dadurch gekennzeichnet,**
daß die auf die blanke Lichtleitfaser (LF) aufgebrachte Innenschicht (CT1) aus in Längsrichtung aufgerecktem Material besteht.

2. Lichtwellenleiter nach Anspruch 1,
**dadurch gekennzeichnet,**
und daß die Außenschicht (CT3) aus in Längsrichtung aufgerecktem Material besteht.

3. Lichtwellenleiter nach einem der vorhergehenden Ansprüche,
**dadurch gekennzeichnet,**
daß die nachfolgende Zwischenschicht (CT2) aus in Längsrichtung aufgerecktem Material besteht.

4. Lichtwellenleiter nach einem der Ansprüche 1 oder 2,
**dadurch gekennzeichnet,**
daß eine Zwischenschicht (CT2) aus Druckbeschichtungsmaterial besteht.

5. Lichtwellenleiter nach Anspruch 1,
**dadurch gekennzeichnet,**
daß die Innenschicht eine Wandstärke zwischen 5 μm und 20 μm aufweist.

6. Lichtwellenleiter nach einem der vorhergehenden Ansprüche,
**dadurch gekennzeichnet,**
daß die Zwischenschicht (CT2) eine Wandstärke zwischen 20 μm und 140 μm aufweist.

7. Lichtwellenleiter nach einem der vorhergehenden Ansprüche,
**dadurch gekennzeichnet,**
daß die Außenschicht (CT3) eine Wandstärke zwischen 20 μm und 40 μm aufweist.

8. Lichtwellenleiter nach einem der vorhergehenden Ansprüche,
**dadurch gekennzeichnet,**
daß das Verhältnis der Wandstark-Innenschicht (CT1) Mittenschicht (CT2) Außenschicht (CT3) zwischen 1:3: 2 und 1:15:3 gewählt ist.

9. Lichtwellenleiter nach einem der vorhergehenden Ansprüche.

**dadurch gekennzeichnet.**

daß die Innenschicht aus einem UV-rechtiven oder thermoplastischen Material (CT1) besteht.

10. Lichtwellenleiter nach einem der vorhergehenden Ansprüche.

**dadurch gekennzeichnet.**

daß die Innenschicht (CT1) einen kleinen Anteil. vorzugsweise unter 20 % langkettiger, vorzugsweise mit Kettenlängen zwischen 5000 und 100 000 aufweist.

11. Lichtwellenleiter nach einem der vorhergehenden Ansprüche.

**dadurch gekennzeichnet.**

daß die Innenschicht (CT1) aus hochmolekularen Polyisobutylen besteht.

12. Lichtwellenleiter nach einem der vorhergehenden Ansprüche.

**dadurch gekennzeichnet.**

daß die Zwischenschicht (CT2) aus einem polsternden Material besteht.

13. Lichtwellenleiter nach Anspruch 7.

**dadurch gekennzeichnet.**

daß die Zwischenschicht (CT2) aus Silikon-Akrylat besteht.

14. Lichtwellenleiter nach einem der vorhergehenden Ansprüche.

**dadurch gekennzeichnet.**

daß die Außenschicht (CT3) aus einem harten Thermoplastmaterial. insbesondere einem Polyätherimid. einem Polyamid oder einem Polyester besteht.

15. Verfahren zum Aufbringen von mehreren Schichten aus Kunststoffmaterial auf eine Lichtleitfaser (LF).

**dadurch gekennzeichnet.**

daß die erste (CT1) Schicht (Innenschicht) im Schlauchreckverfahren auf die Lichtleitfaser (LF) aufgebracht wird.

16. Lichtwellenleiter nach Anspruch 10,

**dadurch gekennzeichnet.**

und daß die Außenschicht (CT3) im Schlauchreckverfahren aufgebracht wird.

17. Lichtwellenleiter nach einem Ansprüche 10 oder 11.

**dadurch gekennzeichnet.**

daß eine Zwischenschicht CT2 im Druck-oder Schlauchreckbeschichtungsverfahren auf die Innenschicht (CT1) aufgebracht wird.

18. Verfahren nach Anspruch 10,

**dadurch gekennzeichnet.**

daß die Zwischenschicht (CT2) einer Vernetzung unterworfen wird.

19. Verfahren nach Anspruch 11,

**dadurch gekennzeichnet.**

daß die Vernetzung durch die Außenschicht hindurch durch UV-Licht vorgenommen wird.

20. Verfahren nach einem der vorhergehenden Ansprüche 10 - 12.

**dadurch gekennzeichnet.**

daß die endgültige Formgebung durch die harte Außenschicht (CT3) erzwungen wird.

21. Verfahren nach einem der vorhergehenden Ansprüche 10 - 13.

**dadurch gekennzeichnet.**

daß die Außenschicht (CT3) auf die geformte. noch frisch vernetzte Zwischenschicht aufgebracht wird.

22. Verfahren nach einem der vorhergehenden Ansprüche 10 - 14.

**dadurch gekennzeichnet.**

daß die Aufbringung der Innenschicht (CT1) mittels eines in der Durchtrittsöffnung ausrechend weiten Extruderkopfes (EX1) vorzugsweise unzentriert. durchgeführt wird.

23. Verfahren nach einem der vorhergehenden Ansprüche 10 - 15.

**dadurch gekennzeichnet.**

daß die Aufbringung der Zwischenschicht (CT2) mittels eines zentrierten Druckwerkzeuges oder eines weiten Spritzwerkzeuges vorgenommen wird.

24. Verfahren nach einem der vorhergehenden Ansprüche.

**dadurch gekennzeichnet.**

daß die Aufbringung der Außenschicht (CT3) mittels eines in der Durchtrittsöffnung weiten Extruderkopfes. vorzugsweise unzentriert. durchgeführt wird.

25. Verfahren nach einem der vorhergehenden Ansprüche.

**dadurch gekennzeichnet.**

daß die Zwischenschicht (CT2) verzellt wird.

# FIG 2

PF

FL

DO1

EX1

RS

RK1

ZR

CT1

DW

CT2

DO2

EX2

RK2

CT3

LWC

# FIG 1

CT2

CT3

CT1

SH

LF

LWC